(19) Europäisches Patentamt
European Patent Office
Office européen des brevets

(11) **EP 3 339 924 A1**

(12) **DEMANDE DE BREVET EUROPEEN**

(43) Date de publication:
**27.06.2018 Bulletin 2018/26**

(51) Int Cl.:
**G02B 6/12** (2006.01)    **G02B 6/13** (2006.01)
**G02B 6/132** (2006.01)

(21) Numéro de dépôt: **17208082.2**

(22) Date de dépôt: **18.12.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **20.12.2016 FR 1601815**

(71) Demandeur: **Thales**
**92400 Courbevoie (FR)**

(72) Inventeurs:
• **CAILLAUD, Christophe**
**91767 PALAISEAU Cedex (FR)**
• **GARREAU, Alexandre**
**91767 PALAISEAU Cedex (FR)**

(74) Mandataire: **Joubert, Cécile et al**
**Marks & Clerk France**
**Counseils en Propriete Industrielle**
**Immeuble "Visium"**
**22, avenue Aristide Briand**
**94117 Arcueil Cedex (FR)**

(54) **CIRCUIT PHOTONIQUE INTEGRE OPTIMISE**

(57) L'invention concerne un circuit photonique inté-gré (PIC) comprenant au moins au moins un guide d'onde passif diélectrique (DWGP) disposé entre un premier (SCWGA1) et un deuxième (SCWGA2) guide d'onde ac-tif semiconducteur, lesdits guides étant disposés sur un substrat (SCSub) comprenant un matériau semi conducteur,

chaque guide d'onde comprenant une zone de coeur (ZSCc, ZDc) dans laquelle se propage un mode lumineux et deux zones de confinement disposées de part et d'autre de la zone de coeur, chaque guide d'onde actif étant couplés au guide d'onde passif de sorte que le mode lumineux se propageant dans la zone de coeur de l'un des guides d'onde se propage dans la zone de coeur de l'autre guide d'onde,

chaque guide d'onde actif étant en outre raccordé au guide d'onde passif par une interface constituée d'un élément antireflet (AR) comprenant au moins une couche antireflet en matériau diélectrique ($C_{AR}$, $C_{AR}(1)$, $C_{AR}(2)$), et disposé sensiblement perpendiculairement au plan du substrat, la ou les couches antireflet présentant un indice ($n_{AR}$, $n_{AR}(1)$, $n_{AR}(2)$) et une épaisseur ($e_{AR}$, $e_{AR}(1)$, $e_{AR}(2)$) adaptés de manière à minimiser les pertes lumineuses à l'interface entre les deux guides d'onde raccor-dés.

FIG.2

**Description**

**DOMAINE DE L'INVENTION**

L'invention concerne les circuits photoniques intégrés, dénommés « Photonic Integrated Circuits » ou PIC en anglais, et plus particulièrement les PIC comprenant des fonctions actives et passives intégrées sur un même substrat. L'invention concerne également un procédé de fabrication de tels circuits.

**ETAT DE LA TECHNIQUE**

Les circuits photoniques intégrés, que nous dénommerons PIC dans la suite de l'exposé, constituent une nouvelle génération de puces opérant non pas sur des électrons mais sur des photons. Les PIC peuvent aujourd'hui contenir plusieurs dizaines de dispositifs optiques sur une surface de quelques millimètres carrés. Ces PIC trouvent des applications dans de multiples domaines comme celui des réseaux télécom ou de l'optique microonde pour application RADAR, LIDAR, radio,....

La mise en oeuvre de PIC nécessite la réalisation sur une même plateforme de composants/d'éléments réalisant des fonctions dites « actives », telles que émetteurs, détecteurs, modulateurs, amplificateurs de lumière, et des composants réalisant des fonctions dites « passives » telles que guides d'onde, multiplexeurs/démultiplexeurs, miroirs, réseaux, coupleurs, polariseurs. Tous ces composants/éléments, actifs comme passifs, présentent une structure de guide d'onde, c'est-à-dire une zone de coeur guidante disposée entre deux zones de confinement de la lumière, d'indice de réfraction plus faible que la zone de coeur..

Les matériaux semiconducteurs III-V (InP, GaAs, GaN, GaSb...) sont idéaux pour réaliser des fonctions actives mais présentent les inconvénients suivants :

- pertes matériaux intrinsèques plus élevées
- moindre flexibilité dans le design de structures verticales différentes dans un composant car les reprises d'épitaxie sont beaucoup plus complexes que les croissances de matériaux diélectriques ou de matériaux amorphes
- difficulté d'isoler électriquement les fonctions actives, sauf à recourir à des étapes complexes (implantation protonique et reprises d'épitaxie épaisses).

Il est possible de réaliser un circuit photonique intégré avec toutes les fonctions voulues (actives et passives) dans une famille de matériaux semiconducteurs. Des lasers-modulateurs à base d'InP intégrés avec des multiplexeurs ont été démontrés, mais les fonctions passives sont moins performantes que celles réalisées en guide diélectrique et requièrent des étapes complexes comme des reprises d'épitaxie additionnelles/des croissances sélectives, de l'hydrogénation pour supprimer les pertes dues au dopage p nécessairement présent dans les zones actives et l'implantation protonique pour isoler les différentes zones actives.

Parallèlement, les guides optiques en matériaux diélectriques (typiquement à base de $SiO_2$, $SiON_x$, $Al_2O_3$, $Si_3N_4$, $TiO_2$, $TeO_2$, $As_2S_3$,...) ou en matériaux amorphes (typiquement le silicium amorphe...) possèdent de nombreuses propriétés très intéressantes :

- faibles pertes optiques intrinsèques de ces matériaux
- large gamme de différences d'indice possibles, ce qui permet d'obtenir des faibles pertes de propagation et un excellent couplage avec les fibres optiques (guide à faible différence d'indice), et des circuits photoniques très petits (guide à forte différence d'indice permettant de très faibles rayons de courbure)
- croissance plus aisée que celle des semiconducteurs cristallins grâce à des méthodes de type PECVD, LPCVD, pulvérisation, sol-gel,....

Les diélectriques ou le silicium amorphe sont donc idéaux pour la réalisation de fonctions passives comme les guides optiques, réseaux (notamment réseaux de Bragg), coupleurs, multiplexeurs/démultiplexeurs... Cependant, ils ne sont pas capables de réaliser des fonctions actives usuellement réalisées grâce aux semiconducteurs III-V (InP, GaAs, GaN, GaSb...) telles que la détection, l'émission, l'amplification ou la modulation rapide (une modulation lente étant possible par contrôle thermique). Dans les exemples suivants, on considère l'InP comme famille de semiconducteur car c'est la plus utilisée pour fonctionner aux longueurs d'onde télécom (1.3 et 1.55 $\mu$m). Pour d'autres applications, on peut remplacer l'InP et les alliages associés par les autres familles de semiconducteur III-V (GaAs, GaN, GaSb,...) sans perte de généralité

La réalisation de composants de type différent (actifs et passifs) sur un même substrat pose un certain nombre de problèmes technologiques. Actuellement, les circuits intégrés photoniques monolithiques comprenant des fonctions actives et passives sur le même substrat peuvent être réalisés par différentes approches :

La première emploie des guides semiconducteurs technologie InP sur substrat InP qui requièrent de nombreuses étapes complexes de fabrication comme plusieurs épitaxies, implantation de phosphore et implantation d'hydrogène. Il faut de plus noter que certaines fonctions sont très complexes à réaliser sur les circuits monolithiques en InP comme les séparateurs de polarisation.

La deuxième utilise la technologie Silicium, qui impose des techniques de collages complexes. Les fonctions passives et certaines actives sont réalisées en silicium. La fonction d'amplification est réalisée grâce à des zones amplificatrices en InP. Cette approche présente de nombreux points critiques : interface de collage entre l'InP et le silicium, couplage entre les guides InP et silicium, dissipation thermique du composant...

La troisième, largement utilisée avec les composants à base de silice sur silicium, est la réalisation du circuit passif à base de $SiO_2$ sur le substrat silicium, puis le collage individuel des puces actives (laser, modulateur, amplificateur optique ou photodiodes) sur ce circuit passif. Cette approche présente l'inconvénient de nécessiter des couplages optiques complexes et ne permet pas la réalisation simultanée de milliers de composants complets sur un même wafer.

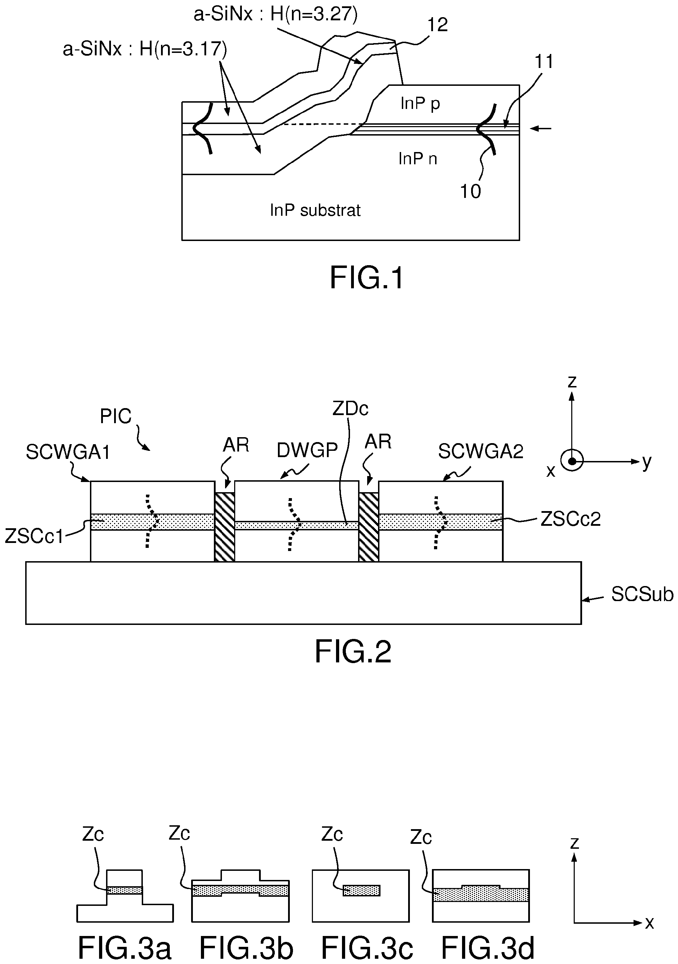

La quatrième approche illustrée figure 1 permet de réaliser sur un même substrat (« wafer » en anglais) semiconducteur InP des fonctions actives reliées entre elles par des guides passifs réalisés en silicium amorphe par PECVD. La fonction active est constituée d'un guide d'onde présentant une zone de coeur 11 à base de multipuits quantiques InGaAsP/InP et deux zones de confinement également à base d'InP.

La fonction passive est constituée d'une couche guide 12 (zone de coeur) de silicium amorphe et de couches confinantes à base d'alliage de silicium amorphe.

Le mode lumineux 10 se propage dans la zone 11, se couple au guide passif (trait pointillé) et se propage ensuite dans la zone 12 en silicium amorphe. De manière générale, on appelle couplage la capacité d'un mode lumineux donné (ici structure spatiale de champ circulaire) à se propager d'un composant à l'autre sans perte (couplage 100%).

Le silicium amorphe a été choisi pour assurer un saut d'indice entre la zone de coeur 11 de l'élément actif et le guide passif le plus faible possible, de manière à minimiser le coefficient de réflexion de l'onde lors du passage d'un élement à l'autre. Cependant l'absorption du silicium amorphe aux longueurs d'onde d'intérêt (typiquement télécom 1.55 $\mu$m ou 1.3 $\mu$m) n'est pas négligeable et rend cette technologie intéressante uniquement pour des composants ayant des guides de petite longueur (0-300$\mu$m). Le silicium amorphe n'est donc pas idéal pour réaliser des filtres optiques avec un grand facteur de qualité (anneaux, cavité Fabry-Pérot). De plus, la minimisation du saut d'indice entre le guide en silicium amorphe et le guide semiconducteur limite la flexibilité sur le choix des matériaux. Cela peut rendre difficile la réalisation de composant avec très faible rayon de courbure et/ou l'obtention de faible pertes de couplage avec une fibre optique. Enfin, le silicium amorphe présente une conductivité électrique supérieure aux diélectriques comme le $SiO_2$ ou le $Si_3N_4$ et isole donc moins bien les différentes zones actives du composant.

Un autre inconvénient des structures uniquement à base de semi conducteur est que l'isolation électrique est difficile à réaliser. Du point de vue de la fabrication, dans le cas de l'isolation des contacts p entre deux composants (par exemple pour isoler électriquement un laser et un modulateur), diverses méthodes sont possibles :

- une implantation protonique des couches dopées p dans la zone passive ainsi qu'une hydrogénation pour diminuer les pertes optiques mais elles restent élevées
- une reprise d'épitaxie pour remplacer les couches p par des couches isolantes, ce qui est bien plus complexe que la croissance de diélectrique. Dans le cas de l'isolation des contacts p et n des deux composants la seule solution consiste à graver l'ensemble de l'empilement semiconducteur jusqu'au substrat semi-isolant et à faire ensuite une reprise d'épitaxie très épaisse (3-4 $\mu$m minimum) pour faire croitre un guide non dopé que l'on devra aligner avec les autres guides. Bien que cette technique représente une vraie gageure sur cette épaisseur, l'isolation reste de mauvaise qualité car les semiconducteurs présentent des conductivités électrique et thermique bien supérieures à celles des diélectriques.

Un but de la présente invention est de remédier aux inconvénients précités en proposant un circuit photonique intégré comprenant au moins un guide d'onde passif diélectrique disposé entre un premier et un deuxième guide d'onde actif semiconducteur, les guides d'onde étant disposés sur un même substrat semi conducteur, permettant de tirer parti des avantages respectifs des deux technologies tout en réalisant un couplage à l'interface avec un minimum de pertes lumineuses.

**DESCRIPTION DE L'INVENTION**

La présente invention a pour objet un circuit photonique intégré comprenant au moins un guide d'onde passif diélectrique disposé entre un premier et un deuxième guide d'onde actif semiconducteur, les guides étant disposés sur un substrat comprenant un matériau semi conducteur,

chaque guide d'onde comprenant une zone de coeur dans laquelle se propage un mode lumineux et deux zones de confinement disposées de part et d'autre de la zone de coeur, chaque guide d'onde actif étant couplé au guide d'onde passif de sorte que le mode lumineux se propageant dans la zone de coeur de l'un des guide d'onde se propage dans la zone de coeur de l'autre guide d'onde, chaque guide d'onde actif étant en outre raccordé au guide d'onde passif par une interface constituée d'un élément antireflet comprenant au moins une couche antireflet en matériau diélectrique, et disposé sensiblement perpendiculairement au plan du substrat, la ou les couches antireflet présentant un indice et une épaisseur adaptés de manière à minimiser les pertes lumineuses à l'interface entre les deux guides d'onde raccordés.

Préférentiellement, les guides d'onde actifs semiconducteurs et le guide d'onde diélectrique passif sont monomode.

Avantageusement au moins une couche diélectrique antireflet s'étend continûment parallèlement au plan du substrat entre la zone de coeur du guide d'onde passif diélectrique et le substrat.

Selon un mode de réalisation l'élément antireflet est constitué d'une couche antireflet unique.

Selon un autre mode de réalisation l'élément antireflet est constitué d'une première couche antireflet en contact avec la zone de coeur du guide d'onde actif semi conducteur raccordé et d'une deuxième couche antireflet en contact avec la zone de coeur du guide d'onde passif diélectrique. Préférentiellement la première couche est en $TiO_2$ ou en $Si_3N_4$ et la deuxième couche en $SiO_2$.

Selon une variante la première couche antireflet et la deuxième couche antireflet s'étendent continûment parallèlement au plan du substrat entre la zone de coeur du guide d'onde passif diélectrique et le substrat, une partie de la deuxième couche antireflet s'étendant parallèlement au plan du substrat constituant en outre la zone de confinement côté substrat du guide d'onde passif diélectrique.

Selon un mode de réalisation le matériau semiconducteur du substrat est de même nature chimique que le matériau semiconducteur des guides d'onde actifs.

Selon un autre mode de réalisation le matériau semiconducteur du substrat n'est pas de même nature chimique que le matériau semiconducteur des guides d'onde actifs, et le substrat comprend une partie principale et une couche tampon configurée pour réaliser une adaptation de maille atomique entre la partie principale du substrat et les guides d'onde actifs semiconducteurs.

L'invention concerne également un procédé de fabrication d'un circuit photonique intégré comprenant au moins un guide d'onde actif semi conducteur et au moins un guide d'onde passif diélectrique (DWGP) le procédé comprenant les étapes consistant à :

- réaliser par épitaxie sur un substrat comprenant un matériau semi conducteur, au moins un ou deux empilements de matériaux semiconducteurs comprenant chacun au moins une couche apte à constituer une zone de coeur d'un guide d'onde actif semiconducteur et au moins deux couches disposées de chaque côté de la zone de coeur et aptes à constituer chacune une zone de confinement,
- graver le ou les empilements de matériaux semiconducteurs de manière à réaliser au moins une zone du substrat dépourvue du ou des empilements de matériaux semiconducteurs,
- réaliser un empilement de matériaux diélectriques, comprenant les sous étapes consistant à :

  *déposer une première couche diélectrique antireflet de manière à ce qu'elle s'étende continûment sur une tranche du ou des guides d'onde actifs et parallèlement au substrat sur la partie du substrat dépourvue d' empilement de matériaux semiconducteurs,
  *déposer au moins une deuxième couche diélectrique antireflet de manière à ce qu'elle s'étende continûment par-dessus la première couche,
  *déposer par-dessus la dernière couche diélectrique antireflet au moins une couche diélectrique apte à constituer une zone de coeur d'un guide d'onde passif diélectrique,

- définir un ou des guides d'onde actifs semiconducteurs et un guide d'onde passif diélectrique à partir du ou des empilements de matériaux semiconducteurs et de l'empilement de matériaux diélectriques,
- les épaisseurs des couches diélectriques étant telles que la zone de coeur du guide d'onde passif diélectrique est en regard de la zone de coeur du ou des deux guides d'onde actifs semiconducteurs, les guides d'onde étant couplés l'un à l'autre de sorte qu'un mode lumineux se propageant dans la zone de coeur de l'un des guides d'onde se propage dans la zone de coeur de l'autre guide d'onde au travers d'une interface de raccordement constituée des couches diélectriques antireflets,

les épaisseurs traversées par le mode lumineux et les indices des couches diélectriques antireflet étant déterminés de sorte que lesdites couches diélectriques antireflet constituent un élément antireflet (AR), de manière à minimiser les pertes lumineuses à l'interface entre les deux zones de coeur.

Selon un autre mode de réalisation le procédé de fabrication d'un circuit photonique intégré comprend au moins un guide d'onde actif semi conducteur et au moins un guide d'onde passif diélectrique, le procédé comprenant les étapes consistant à :

- réaliser par épitaxie sur un substrat comprenant un matériau semi conducteur, un ou deux empilements de matériaux semiconducteurs comprenant chacun au moins une couche apte à constituer une zone de coeur d'un guide d'onde actif semiconducteur et au moins deux couches disposées de chaque côté de la zone de coeur et aptes à constituer chacune une zone de confinement, et définir un guide semiconducteur à partir de ce ou ces empilements de matériaux semiconducteurs,
- graver le ou les empilements de matériaux semiconducteurs de manière à réaliser au moins une zone du substrat dépourvue du ou des empilements de matériaux semiconducteurs,
- réaliser un empilement de matériaux diélectriques, comprenant les sous étapes consistant à :

   *déposer une première couche diélectrique antireflet ($C_{AR}(1)$) de manière à ce qu'elle s'étende continûment sur une tranche du ou des guides d'onde actifs et parallèlement au substrat sur la partie du substrat dépourvue d'empilement de matériau diélectrique,
   *déposer au moins une deuxième couche diélectrique antireflet ($C_{AR}(2)$) de manière à ce qu'elle s'étende continûment par-dessus la première couche,
   *déposer par-dessus la dernière couche diélectrique antireflet au moins une couche diélectrique apte à constituer une zone de coeur d'un guide d'onde passif diélectrique,

- définir un guide d'onde passif diélectrique à partir de l'empilement de matériaux diélectriques,
- les épaisseurs des couches diélectriques étant telles que la zone de coeur du guide d'onde passif diélectrique est en regard de la zone de coeur du ou des deux guides d'onde actifs semiconducteurs, les guides d'onde étant couplés l'un à l'autre de sorte qu'un mode lumineux se propageant dans la zone de coeur de l'un des guides d'onde se propage dans la zone de coeur de l'autre guide d'onde au travers d'une interface de raccordement constituée des couches diélectriques antireflets,

les épaisseurs traversées par le mode lumineux et les indices des couches diélectriques antireflet étant déterminés de sorte que lesdites couches diélectriques antireflet constituent un élément antireflet (AR), de manière à minimiser les pertes lumineuses à l'interface entre les deux zones de coeur. D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée illustre une méthode de réalisation de composants (structurés en guide d'onde) actifs et passifs sur le même substrat selon l'état de la technique.
La figure 2 illustre un circuit photonique selon l'invention.
La figure 3 illustre différents exemples de guide d'onde.
La figure 4 illustre un mode de réalisation de l'invention dans lequel le substrat comporte une couche tampon pour réaliser l'accord de maille entre la partie principale du substrat et le composant actif.
La figure 5 illustre une variante de l'invention dans laquelle l'élément antireflet est constitué d'un bicouche.
La figure 6 illustre la variation du coefficient de réflexion à l'interface entre les deux guides en fonction de l'épaisseur de la première couche antireflet, l'épaisseur de la deuxième couche antireflet étant constante.
La figure 7 illustre la variation du coefficient de réflexion à l'interface entre les deux guides en fonction de l'épaisseur de la deuxième couche antireflet, l'épaisseur de la première couche antireflet étant constante.
La figure 8 illustre la variation du coefficient de réflexion en fonction de la longueur d'onde pour 3 indices effectifs de guide actif différents.
La figure 9 décrit la variation du coefficient de réflexion en fonction de la longueur d'onde dans 3 cas différents.
La figure 10 illustre une variante de l'invention dans laquelle la couche antireflet unique s'étend verticalement et horizontalement.
La figure 11 illustre une variante préférée de l'invention dans laquelle les deux couches du bicouche antireflet s'étendent verticalement et horizontalement.
La figure 12 illustre une variante de l'invention dans laquelle les quatre couches du quadricouche antireflet s'étendent verticalement et horizontalement.
La figure 13 illustre un guide d'onde actif et un guide d'onde passif dans un plan de coupe XZ.
La figure 14 illustre la distribution de l'intensité lumineuse du mode guidé dans le guide passif dans un plan de coupe XZ.
La figure 15 schématise la deuxième étape du procédé selon l'invention.
La figure 16 schématise la troisième étape du procédé selon l'invention.
La figure 17 schématise la définition ultérieure des deux guides.

**DESCRIPTION DETAILLEE DE L'INVENTION**

La figure 2 illustre un circuit photonique intégré PIC selon l'invention.

Le circuit photonique intégré PIC comprend au moins un guide d'onde passif diélectrique DWGP, disposé entre un premier guide d'onde actif semi conducteur SCWGA1 et un deuxième guide d'onde actif semi conducteur SCWGA2, les trois guides étant disposés côte à côte sur un substrat SCSub comprenant un matériau semi conducteur. On entend par « onde » guidée dans le guide une onde lumineuse dans les domaines de l'UV, du visible ou de l'infra rouge. Typiquement pour les applications télécom, l'onde lumineuse présente une longueur d'onde comprise entre 1200 nm et 1650 nm.

Chaque guide d'onde comprend une zone de coeur ZSCc1 pour le premier guide actif semiconducteur SCWGA1, ZSCc2 pour le deuxième guide actif semiconducteur SCWGA2, et ZDc pour le guide DWGP, dans laquelle se propage le mode lumineux, et deux zones de confinement disposées de part et d'autre de la zone de coeur.

On définit le plan du substrat XY comme étant le plan horizontal. On entend par zones de confinement des couches empilées selon la direction Z permettant le confinement dans la direction verticale Z. Le confinement latéral dans le plan XY peut être réalisé de différentes manières bien connues de l'homme de l'art. Pour qu'il y ait confinement de l'onde lumineuse se propageant dans le guide, l'indice de réfraction de la zone de coeur doit être strictement supérieur à l'indice de réfraction des zones de confinement. La figure 3 illustre différents exemples de structures de guide d'onde vu en coupe dans le plan XZ connu de l'homme de l'art. La zone de coeur est dénommée Zc. La figure 3a illustre la structure ruban profond (« ridge » en anglais), la figure 3b la structure nervure (« Rib » en anglais), la figure 3c la structure canal enterré (« buried channel » en anglais) et la figure 3d la structure nervure enterrée (« Buried rib » en anglais). A noter que dans le cas d'un ruban tel qu'illustré figure3a, selon une variante la zone de confinement supérieure est constituée d'air, c'est-à-dire que la zone de coeur est directement en contact avec l'air.

La zone de coeur est soit constituée d'un matériau massif, soit d'un empilement de différents matériaux. On dénomme indice effectif neff l'indice moyen vu par le mode lumineux se propageant dans le guide, soit $neff_{sc}$ pour le guide actif et $neff_D$ pour le guide passif. Nous considérerons sur l'ensemble des figures que le mode lumineux se propage selon Y.

On entend par guide d'onde actif semiconducteur un guide d'onde à base de matériau semiconducteur. Ces guides actifs sont bien connus de l'état de la technique, comme expliqué plus haut.

Les deux guides d'ondes actifs SCWGA1 et SCGA2 réalisent préférentiellement deux fonctions différentes : laser/modulateur ; laser/amplificateur ; laser/détecteur ; amplificateur/détecteur...

La zone de coeur est constituée d'un matériau massif ou de plusieurs couches semiconductrices pour constituer un multi puits quantique (Multi Quantum Well en anglais) ou quantum dot.

Selon un premier mode de réalisation les guides actifs sont à base d'InP, avec par exemple une zone de coeur en InGaAsP/InGaAs ou en AlGaInAs (indice de coeur compris entre 3.17 et 3.6) et des zones de confinement en alliage InP ou en AlGaInAs ou en InGaAsP. Le guide est alors un simple guide dilué réalisé dans la famille de semiconducteur (ici InP) commune au substrat et à l'ensemble des empilements du guide. Le substrat semiconducteur utilisé est dans ce cas un substrat également en InP. Dans ce premier exemple le matériau semiconducteur du substrat est de même nature chimique que le matériau semiconducteur du guide d'onde actif (base chimique InP).

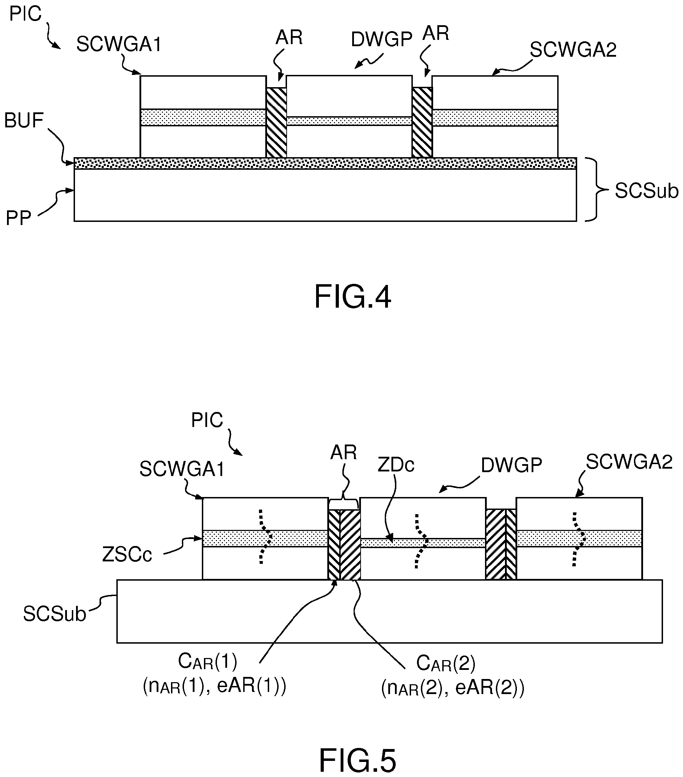

Selon un deuxième mode de réalisation le matériau semiconducteur du substrat n'est pas de même nature chimique que le matériau semiconducteur des guides d'ondes actifs. Par exemple un substrat en Silicium et un guide à base d'InP. Dans ce cas l'accord des mailles cristallines entre les deux familles (première famille pour le substrat et deuxième famille pour le guide actif) se fait à l'aide d'une couche d'interface dite tampon BUF (buffer en anglais). Le substrat SCSub comprend alors une partie principale PP (en Silicium dans l'exemple) et une couche tampon BUF, tel que schématisé figure 4.

Le guide d'onde diélectrique est constitué de matériaux diélectriques amorphes. La zone de coeur est typiquement en $TiO_2$, $Si_3N_4$, $SiON_x$, a-Si, $ZrO_2$, tandis que les zones de confinement sont constituées typiquement de matériau d'indice plus faible tels que $SiO_2$, $SiON_x$, $Al_2O_3$ ... L'intérêt du nitrure de silicium comme couche guidante est la transparence de ce matériau aux longueurs d'ondes de télécommunication, permettant de réaliser des guides de toute longueur, typiquement jusqu'à 10mm.

Chaque guide d'onde actif est couplé au guide d'onde passif de sorte que le mode lumineux se propageant dans la zone de coeur de l'un des guides d'onde se propage dans la zone de coeur de l'autre guide d'onde. Le couplage doit conserver la répartition spatiale du mode lumineux dans le plan perpendiculaire à la propagation (par exemple une répartition circulaire), lors du passage de l'un à l'autre. Le couplage direct s'effectue typiquement en raccordant les deux guides, c'est-à-dire en positionnant la zone de coeur de chaque guide de manière à ce qu'elle soit en regard de l'autre. Les zones de coeur sont alignées dans le sens de la propagation de l'onde.

Les indices optiques des matériaux diélectriques (1.5 pour le $SiO_2$, 2 pour le $Si_3N_4$ et 2.3 pour le $TiO_2$ à 1550nm) sont usuellement plus faibles que ceux des semiconducteurs (3.17 pour l'InP et 3.5 pour le silicium à 1550nm). Si aucune précaution n'est prise, une réflexion du mode optique atteignant 15% existe à l'interface semiconducteur/diélectrique entre les deux guides (cas des guides silices à faibles différences d'indices). Pour des composants comme les lasers, cette réflexion peut être très handicapante pour leur bon fonctionnement.

Selon l'invention, chaque guide d'onde actif est raccordé au guide d'onde passif par une interface constituée d'un élément antireflet AR comprenant au moins une couche antireflet en matériau diélectrique, et disposé sensiblement selon l'axe Z perpendiculairement au plan du substrat XY. Du fait des méthodes de réalisation, l'élément antireflet est disposé perpendiculairement à +/- 15° près. Pour réaliser la fonction antireflet, au moins une couche antireflet présente un indice et une épaisseur adaptés de manière à ce que AR constitue un empilement antireflet qui minimise les pertes lumineuses à l'interface. Plusieurs variantes d'élément antireflet AR sont décrites plus loin.

La présence de l'antireflet permet de minimiser les pertes lumineuses à l'interface optique entre les deux guides. De plus, le PIC selon l'invention comprend des guides diélectriques ou en matériaux amorphes directement couplés aux guides semiconducteurs sur un même substrat. Il est ainsi possible de bénéficier à la fois des avantages des guides semiconducteurs (fonctions actives très performantes) et de celles des guides diélectriques (facilité de fabrication, large gamme d'indice accessible, faibles pertes matériaux). Ceci permet de simplifier la fabrication de circuit intégré photonique complexe (comprenant des fonctions de gain, de détection, passives,...) et de réaliser de nouvelles fonctions.

Un autre avantage important de cette méthode est que le guide diélectrique DWGP fournit une isolation électrique et thermique totale entre deux fonctions actives du PIC SCWGA1 et SCWGA2, disposées de part et d'autre du guide passif et couplées à lui selon l'invention. En effet les diélectriques sont de bons isolants thermique et électrique. Dans une structure purement semiconducteurs, l'isolation électrique est plus difficile à réaliser. En outre il est fournit une isolation sans nécessité d'implantation ou de reprise d'épitaxie complexe (qui n'isole que partiellement les fonctions actives). Cette structure permet de faire passer des lignes électriques planaires sans l'emploi de résines à base de polymères constitués de Benzo cyclo butadiène ou de polyimide. Le substrat SCSub est par exemple un substrat semi-isolant à haute résistivité à base d'InP dopé fer.

Selon une variante l'interface entre un guide d'onde actif et le guide d'onde passif est un élément antireflet AR constitué d'une couche mince antireflet unique $C_{AR}$ en contact d'un côté avec la zone de coeur ZSCc du guide d'onde actif semi conducteur et de l'autre côté avec la zone de coeur ZDc du guide d'onde passif diélectrique DWGP.

L'indice $n_{AR}$ et l'épaisseur $e_{AR}$ de la couche mince $C_{AR}$ se calculent à partir des formules bien connues :

$$n_{AR}^2 = neff_D . neff_{sc} \text{ et} : e_{AR} = p \times \lambda/(4. n_{AR}) \text{ avec p entier, soit pour p=1 : } e_{AR} =$$

avec p entier, soit pour p=1 : $e_{AR} = \lambda/(4. n_{AR})$

$\lambda$ longueur d'onde de fonctionnement du guide, par exemple 1.55 $\mu$m.

Pour un guide diélectrique d'indice 1.65 (accessible avec un guide SiN/Si02 ou TiO2/SiO2) et un guide semiconducteur d'indice 3.2, l'indice $n_{AR}$ vaut 2.2978 ce qui correspond à une couche AR en Ti02.

Selon une autre variante illustrée figure 5 l'interface entre un guide d'onde actif et le guide d'onde passif est un l'élément antireflet AR bicouche constitué d'une première couche mince antireflet $C_{AR}(1)$ en contact avec la zone de coeur du guide d'onde actif semi conducteur et d'une deuxième couche antireflet $C_{AR}(2)$ en contact avec la zone de coeur ZDc du guide d'onde passif diélectrique.

L'utilisation de deux couches au lieu d'une permet d'obtenir un coefficient de réflexion plus faible. Le calcul des indices et épaisseurs respectives des deux couches s'effectue à l'aide de logiciels d'optimisation d'empilements de couches minces utilisant un formalisme matriciel, bien connus de l'homme de l'art.

Par exemple la première couche $C_{AR}(1)$ est en $TiO_2$, indice 2.293 et la deuxième couche $C_{AR}(2)$ en $SiO_2$ d'indice 1.473.

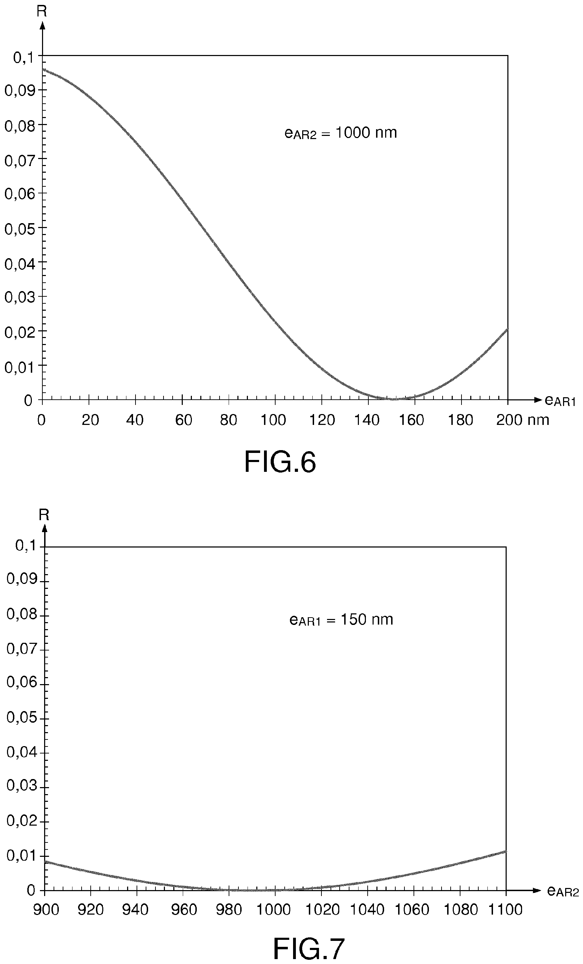

Les figures 6 et 7 montrent l'influence des épaisseurs des couches AR. La figure 6 illustre la variation du coefficient de réflexion R en fonction de l'épaisseur de la première couche $e_{AR1}$ en $TiO_2$, l'épaisseur de la deuxième couche en $SiO_2$ $e_{AR2}$ étant constante égale à 1000 nm. La figure 7 illustre la variation du coefficient de réflexion R en fonction de l'épaisseur de la deuxième couche $e_{AR2}$ en $SiO_2$, l'épaisseur de la première couche $e_{AR1}$ en $TiO_2$ étant constante égale à 150 nm. Pour cette modélisation, il a été considéré un guide semiconducteur d'indice effectif de 3.2 et un guide diélectrique d'indice effectif 1.76, constitué d'une zone de coeur en Ti02 (indice 2.29) d'épaisseur et de largeur 0.5 $\mu$m entouré d'un matériau d'indice 1.5, du $SiO_2$ par exemple.

On constate qu'un coefficient de réflexion R inférieur à 0.01 est obtenu avec une tolérance sur l'épaisseur des couches de l'ordre de 10%.

Sur la figure 6, on constate qu'un coefficient de réflexion R inférieur à 0.001 est obtenu avec une tolérance sur la couche « fine » de $TiO_2$ de l'ordre de 7%. Sur la figure 7, on constate qu'un coefficient de réflexion R inférieur à 0.001 est obtenu avec une tolérance sur la couche « épaisse » de $SiO_2$ de l'ordre de 3%. La tolérance sur la couche « fine » est donc plus élevée que la tolérance sur la couche épaisse.

Ainsi, la structure proposée permet d'obtenir des réflexions très faibles pour un couplage optimal entre les guides.

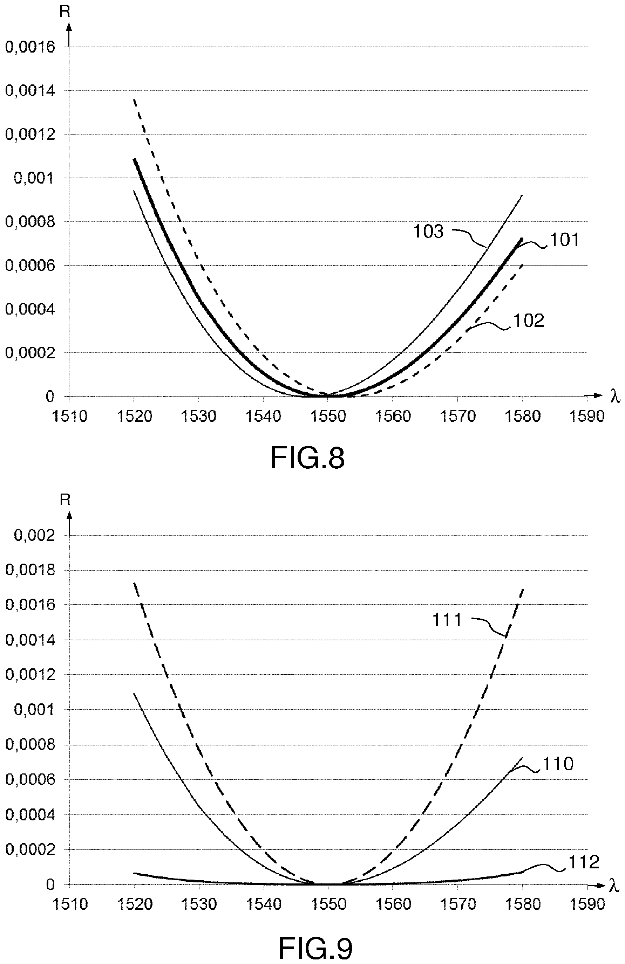

Les figures 8 et 9 illustrent la tolérance d'un traitement AR en fonction de la longueur d'onde $\lambda$ de l'onde

lumineuse se propageant dans le PIC.

Pour la figure 8 les épaisseurs de $TiO_2$ et $SiO_2$ sont respectivement égales à 188 nm et 1639 nm et ont été optimisées (grâce à un logiciel d'optimisation) pour une réflectivité minimale à 1550nm.

Pour cette modélisation, il a été considéré un guide semiconducteur d'indice effectif de 3.2 et un guide diélectrique d'indice effectif 1.76, constitué d'une zone de coeur d'indice 2.3 (par exemple du Ti02) d'épaisseur et de largeur 0.5 $\mu$m entouré d'un matériau d'indice 1.5 (du $SiO_2$ par exemple).

La figure 8 illustre la variation de R en fonction de la longueur d'onde pour 3 indices effectifs de guide actif différents : la courbe 101 correspond à une valeur d'indice effectif $neff_{SC}$ de 3.2 (cas précédent), la courbe 102 correspond à une valeur de 3.18 et la figure 103 à une valeur de 3.22.

On constate qu'un même bicouche antireflet fonctionne correctement pour différentes valeurs d'indice effectifs, c'est-à-dire différents types de guide actif. Ceci est important car des guides actifs semiconducteurs différents peuvent être connectés par un même guide diélectrique (voir figure 2). Le PIC selon l'invention comprend ainsi des guides passifs présentant une bonne accordabilité avec les guides semiconducteurs.

Selon un mode de réalisation, la zone de coeur du guide passif est en $Si_3N_4$ (indice 2) entre deux couches de confinement en Si02 (indice 1.5).

Selon une autre variante, l'élément antireflet AR est constitué de deux bicouches soit de 4 couches minces. La figure 9 décrit la variation de R en fonction de la longueur d'onde :

- courbe 110: élément AR constitué d'un bicouche $TiO_2/SiO_2$ optimisé pour un guide actif d'indice effectif 3.2 et un guide passif d'indice effectif 1.76 avec un coeur en Ti02 (n=2.3) et des zones de confinement en Si02.
- courbe 111: élément AR constitué d'un bicouche $Si_3N_4/SiO_2$ optimisé pour un guide actif d'indice effectif 3.2 et un guide passif d'indice effectif 1.76 avec un coeur en $TiO_2$ (indice 2.3).
- courbe 112: élément AR constitué d'un quadricouche de deux bicouches $Si_3N_4/SiO_2$ (263 nm de $Si_3N_4$ puis 108 nm de $SiO_2$ puis 208 nm de $Si_3N_4$ puis 1067nm de $SiO_2$) optimisé pour un guide passif d'indice effectif 1.76 avec un coeur en Ti02 et des zones de confinement en $SiO_2$.

On remarque que l'on obtient un meilleur anti-reflet (plus tolérant en longueur d'onde) en utilisant du $TiO_2$ comme couche de fort indice qu'en utilisant du $Si_3N_4$, car le $TiO_2$ a un indice intermédiaire entre les guides diélectrique et semiconducteur tandis que le $Si_3N_4$ a un indice proche du guide diélectrique. L'utilisation d'un quadricouche permet d'améliorer très fortement les performances en obtenant un coefficient de réflexion inférieur à $10^{-4}$ (<0.01%) entre 1520 nm et 1580 nm. On peut ainsi obtenir d'excellentes performances en utilisant uniquement de $Si_3N_4$ et du $SiO_2$.

Les couches minces diélectriques de l'élément antireflet AR sont typiquement déposées par PECVD (Plasma Enhanced Chemical Vapor Deposition) sur un (ou des) guide actif déjà présent sur le substrat. Chaque couche AR déposée recouvre la tranche du guide actif et s'étend selon une zone horizontale sur le substrat dépourvue de guide actif. De ce fait selon une variante préférée compatible de ce mode de fabrication, au moins une couche diélectrique antireflet s'étend continûment parallèlement au plan du substrat XY entre la zone de coeur du guide d'onde passif diélectrique ZDc et le substrat SCSub. La couche déposée s'étend donc verticalement et horizontalement. Préférentiellement toutes les couches minces de l'élément AR présentent cette caractéristique.

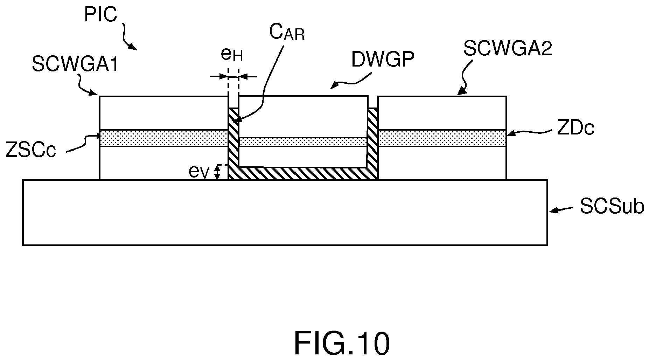

La figure 10 illustre le cas d'une couche unique.

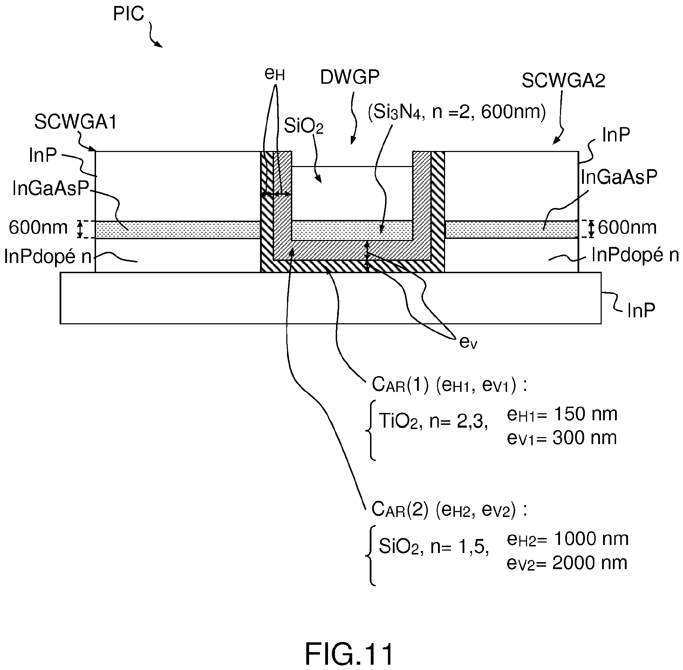

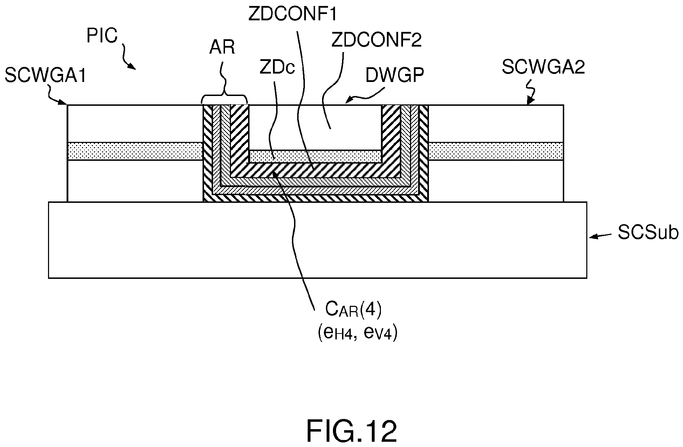

La figure 11 illustre le cas d'un élément AR bicouche, sur un exemple particulier de structure et la figure 12 le cas d'un élément AR quadricouche

Selon un premier mode de réalisation, dans l'exemple de structure de la figure 11 les deux guides actifs sont réalisés à partir du même empilement, ce qui permet de simplifier le process au prix d'un compromis sur les performances. Le premier guide actif SCWGA1 est par exemple un SOA (pour Semiconductor Optical Amplifier) et le deuxième guide actif SCWGA2 est une photodiode.

Une autre possibilité est un laser et un modulateur, avec pour chaque guide actif une structure à multi-puits quantiques identique (même puits quantiques) pour simplifier le process. L'épaisseur dans ce cas est plutôt dans la gamme 100-300 nm, et les matériaux des multipuits quantique sont l'InGaAs(P) ou l'InGaAlAs) (bien connu de l'état de l'art). Cette structure fonctionne car la photoluminescence est proche de la longueur d'onde de fonctionnement.

Une combinaison d'un laser et d'un SOA est également possible, avec des multi puits quantiques en InGaAsP ou InGaAlAs : la photoluminescence est proche de la longueur d'onde d'émission.

Selon un autre mode de réalisation, les deux guides actifs sont réalisés à partir d'empilements différents. Une possibilité est par exemple un laser et un modulateur optimisé: multi puits en InGaAsP ou InGaAlAs (les deux sont possible que ce soit pour le laser ou le modulateur); la photoluminescence est proche de la longueur d'onde d'utilisation pour le laser, plus petite pour le modulateur pour qu'il soit transparent à la lumière en l'absence de polarisation électrique; l'épaisseur des multi puits quantique est typiquement de 100 -300 nm dans ce cas.

On introduit l'épaisseur horizontale $e_H$ d'une couche diélectrique déposée qui correspond à l'épaisseur de la couche anti reflet $e_{AR}$ qui est vue par la lumière se propageant dans les guides, et l'épaisseur verticale $e_V$ qui correspond à l'épaisseur de la partie horizontale de cette même couche diélectrique déposée, s'étendant parallèlement au substrat. Sur les figures 11 et 12 l'ensemble des couches de l'élément AR s'étendent continûment parallèlement au plan du substrat XY entre la zone de coeur du guide d'onde passif diélectrique ZDc et le substrat SCSub. Le guide passif, également constitué de couches diélectriques, est réalisé après le dépôt des couches antireflet.

Préférentiellement, comme illustré figures 11 et 12, la dernière couche AR fait également office de couche de confinement ZDCONF1 côté substrat. Cette caractéristique permet de simplifier la fabrication en minimisant les étapes technologiques. En effet, dans ce cas le même dépôt diélectrique réalise à la fois une couche de l'élément antireflet et une zone de confinement du guide diélectrique.

Par exemple lorsque l'élément AR comprend une première couche antireflet $C_{AR}(1)$ et une deuxième couche antireflet $C_{AR}(2)$ qui s'étendent continûment parallèlement au plan du substrat XY entre la zone de coeur du guide d'onde passif diélectrique ZDc et le substrat, la partie de la deuxième couche antireflet $C_{AR}(2)$ s'étendant parallèlement au plan du substrat constitue la zone de confinement ZDCONF1 inférieure côté substrat du guide d'onde passif diélectrique DWGP. La première couche $C_{AR}(1)$ présente une épaisseur horizontale $e_{H1}$ et une épaisseur verticale $e_{V1}$, et la deuxième couche $C_{AR}(2)$ présente une épaisseur horizontale $e_{H2}$ et une épaisseur verticale $e_{V2}$.

Pour un quadricouche, c'est $C_{AR}(4)$ qui constitue la couche ZDCONF1, tel qu'illustré figure 12.

Les couches diélectriques (élément AR, zone de coeur et zone de confinement supérieur) sont déposées successivement, après la gravure des empilements semi conducteurs, par une méthode de dépôt isotrope ou faiblement anisotrope (PECVD, pulvérisation...). Il convient de dimensionner soigneusement les différentes couches diélectriques. On connaît en fonction de la méthode de dépôt la relation entre l'épaisseur horizontale $e_H$ et l'épaisseur verticale $e_V$. On a typiquement $e_H$ de l'ordre de $0.5e_V$ à $0.7e_V$. Par exemple pour une dernière couche antireflet en $SiO_2$, on a vu qu'une épaisseur horizontale ($e_{H2}$ bicouche ou $e_{H4}$ quadricouche) de 1000 nm environ convenait pour une longueur d'onde télécom 1,55 $\mu$m, ce qui conduit à une épaisseur verticale ($e_{V2}$ bicouche ou $e_{V4}$ quadricouche) de 1400 à 2000 nm. Dans l'exemple de structure illustré figure 12 les deux guides actifs ont une zone de coeur en InGaAsP entre deux couches d'InP déposées sur un substrat en InP Les deux couches minces formant l'élément AR sont en $TiO_2/SiO_2$ tel que décrit précédemment. La partie horizontale de la couche de $SiO_2$ qui s'étend entre le coeur et le substrat constitue la zone de confinement inférieure et présente une épaisseur de 1400 nm à 2000 nm. Une épaisseur horizontale totale du traitement antireflet d'environ 1500 à 2000 nm (figures 10-11) conduit à une épaisseur totale du traitement antireflet selon l'axe Z de 2100 à 4000 nm.

La zone de coeur est par exemple en SiN et la zone de confinement supérieure est également en $SiO_2$. Les couches antireflet déposées servent également pour l'interface du guide DWGP avec le deuxième guide actif SCWGA2.

En outre, l'indice des matériaux diélectriques étant plus faible que celui des semiconducteurs, il convient de dimensionner soigneusement les zones de confinement inférieure et supérieure (épaisseurs, différence d'indice), afin que le mode guidé dans le guide passif ne voie pas le substrat semiconducteur ou la couche BUF qui pomperait le mode guidé. Il faut également s'assurer un bon couplage entre le guide semiconducteur et le guide diélectrique.

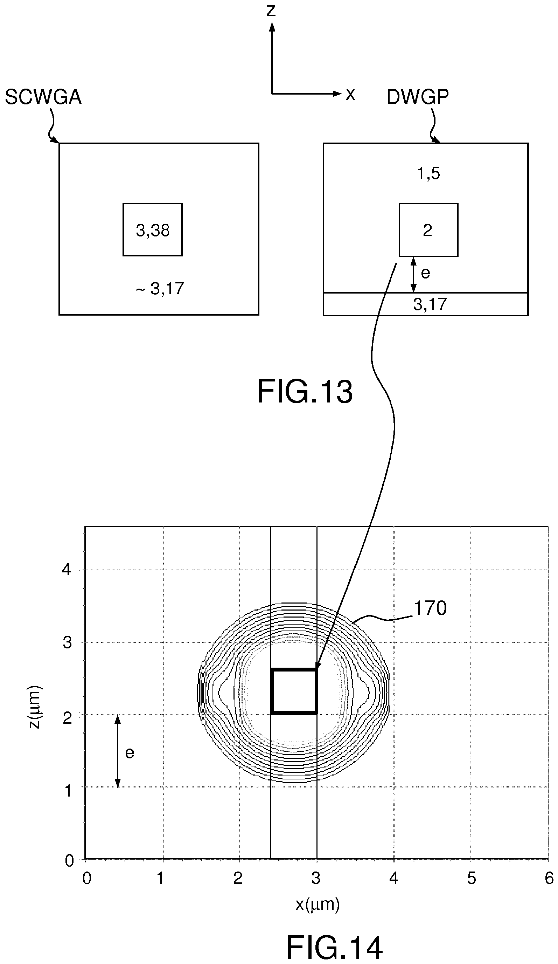

A titre d'exemple, la figure 13 illustre dans le plan de coupe XZ la jonction entre deux guides carrés de 0.6 $\mu$m, l'un semiconducteur SCWAGA (indice de coeur 3.38, dilué dans un semiconducteur, et l'autre diélectrique (indice de coeur 2, entouré de zones de confinement verticales et latérales d'indice 1.5 déposés sur un même substrat de même nature chimique que le guide actif. La simulation optique, ne prenant pas en compte un traitement AR, montre une transmission de 91.7% entre ces deux guides et une réflexion de 8.5%. Avec un traitement AR, on obtient une transmission supérieure à 99% entre les deux guides

La figure 14 illustre la distribution de l'intensité lumineuse du mode guidé dans le guide passif dans un plan de coupe XZ. La courbe 170 correspond à une atténuation de 30 dB d'un mode lumineux se propageant dans la zone de coeur. Au-delà d'une épaisseur e de diélectrique de l'ordre d'1 $\mu$m, le mode optique du guide diélectrique ne voit plus le substrat semiconducteur. Une épaisseur de diélectrique supérieure à 1 $\mu$m est donc nécessaire pour réaliser des guides diélectriques sur substrat semiconducteur pour un guide à fort contraste d'indice (coeur du guide diélectrique en $TiO_2$ ou $Si_3N_4$). Cette condition d'une épaisseur e supérieure à 1000 nm est compatible de l'épaisseur de la partie horizontale de la couche de $SiO_2$ calculée précédemment (2000 nm).

La valeur minimale de cette épaisseur nécessaire pour une bonne isolation augmente si le contraste d'indice entre coeur et confinement diminue.

En optimisant l'empilement diélectrique de l'élément antireflet AR selon l'invention, la transmission est proche de 100% à l'interface diélectrique/semiconducteur et la dernière couche antireflet faisant office de couche de confinement assure une bonne isolation optique du mode lumineux lorsqu'il se propage dans la zone de coeur du guide diélectrique.

Pour un bon couplage, l'alignement entre les guides doit être extrêmement précis pour qu'ils se raccordent sans pertes lumineuses, ce qui est le cas car l'alignement vertical est défini par dépôt diélectrique (précision <100 nm pouvant atteindre la dizaine de nm) et l'alignement latéral est défini par lithographie (précision de ≈10-500 nm selon la méthode comme la lithographie électronique, la lithographie stepper, la lithographie contact,...) ou intrinsèque (guides diélectrique et semiconducteur définis par la même lithographie). De plus, cet alignement est fait simultanément sur l'ensemble de la plaque et non composant par composant.

L'invention porte également sur un procédé de fabrication d'un circuit photonique intégré PIC comprenant au moins un guide d'onde actif semi conducteur SCWGA et au moins un guide d'onde passif diélectrique DWGP.

Le procédé décrit ci-dessous est compatible des cas suivants :

- on définit un guide actif à partir d'un empilement semiconducteur,
- on définit un premier et un deuxième guide actif à partir d'un empilement semiconducteur unique,
- on définit un premier guide actif à partir d'un empilement semiconducteur et on définit un deuxième guide actif à partir d'un empilement semiconducteur différent.

Bien entendu le procédé peut être mis en oeuvre pour réaliser en parallèle une pluralité de guides d'onde actifs et passifs sur un même substrat.

Dans une première étape on réalise par épitaxie sur un substrat comprenant un matériau semi conducteur, au moins un ou deux empilements de matériaux semiconducteurs comprenant au moins une couche apte à constituer une zone de coeur ZSCc et au moins deux couches disposées de chaque côté de la zone de coeur et aptes à constituer chacune une zone de confinement.

Selon une première variante, cette étape comprend la définition latérale du ou des guides d'onde semiconducteurs. Cette variante s'applique par exemple pour un guide enterré 5 (Cf figure 3c et 3d) pour lequel on grave le(s) guide(s) avant de faire une reprise d'épitaxie pour enterrer le guide, selon des procédés bien connus de l'état de l'art.

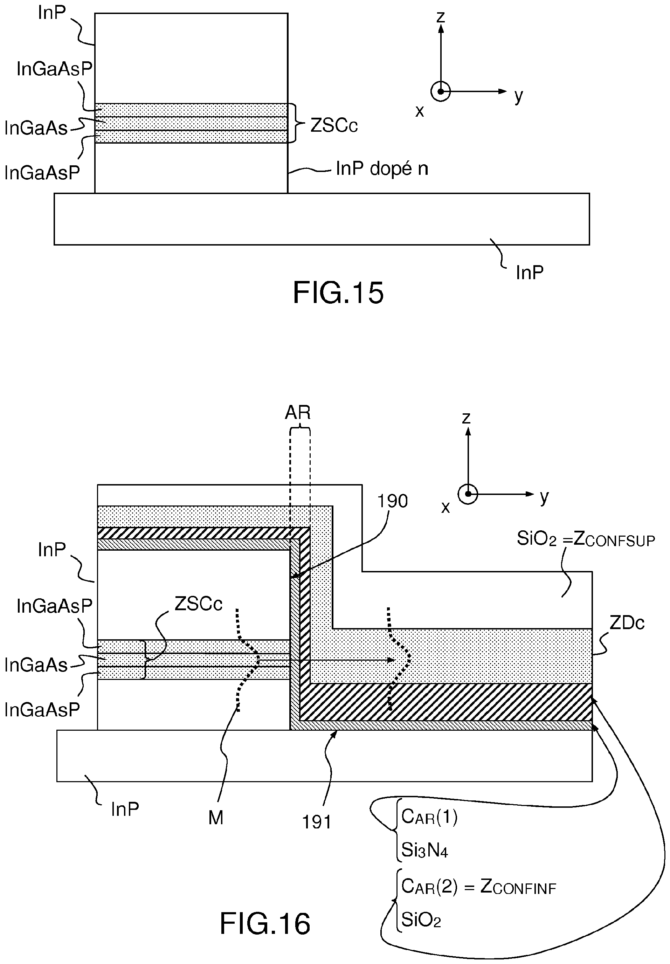

Dans une deuxième étape on grave le ou les empilements de matériaux semiconducteurs de manière à réaliser au moins une zone du substrat dépourvue du/des empilements de matériaux semiconducteurs, tel qu'illustré figure 15. C'est sur cette zone que l'on va réaliser ensuite le guide d'onde passif diélectrique.

Pour la première variante du procédé et lorsque l'on souhaite réaliser deux guides actifs, lors de cette étape de gravure la zone du substrat dépourvue d'empilement(s) de matériaux semiconducteurs est localisée entre le premier et le deuxième guide actif semiconducteurs.

Dans une troisième étape on réalise un empilement de matériaux diélectriques, par exemple par PECVD, tel qu'illustré figure 16.

Dans cette troisième étape on dépose d'abord au moins une première couche diélectrique antireflet $C_{AR}(1)$ de manière à ce qu'elle s'étende continûment sur une tranche 190 du ou des guides d'onde actifs et parallèlement au substrat sur la partie du substrat 191 dépourvue d' s de matériaux semiconducteurs.

Dans l'exemple de la figure 16 on dépose ensuite au moins une deuxième couche diélectrique antireflet $C_{AR}(2)$ de manière à ce qu'elle s'étende continûment par-dessus la première couche.

Par exemple selon un premier mode de réalisation on dépose seulement une première couche antireflet, selon une deuxième mode de réalisation on dépose une première et une deuxième couche antireflet, et selon un troisième mode de réalisation on dépose quatre couches antireflet. La dernière couche diélectrique antireflet déposée ($C_{AR}(2)$ pour le deuxième mode de réalisation et $C_{AR}(4)$ pour le troisième mode de réalisation) est apte à constituer une couche de confinement inférieur ZCONFinf.

On dépose enfin par-dessus la dernière couche diélectrique antireflet au moins une couche diélectrique apte à constituer une zone de coeur ZDc d'un guide d'onde passif diélectrique.

Selon un mode de réalisation, on dépose également une couche diélectrique apte à constituer une zone de confinement supérieure ZCONFsup du guide d'onde diélectrique.

Selon un autre mode de réalisation, s'appliquant par exemple pour le cas d'un guide enterré tel qu'illustré figure 3c, le guide diélectrique est gravé latéralement après le dépôt de zone de coeur, puis on dépose la couche diélectrique de confinement supérieure qui enterre le guide.

Selon un autre mode de réalisation, après la gravure de la zone de coeur, celle-ci est laissé en contact avec l'air, l'air réalisant alors le confinement supérieur de la lumière.

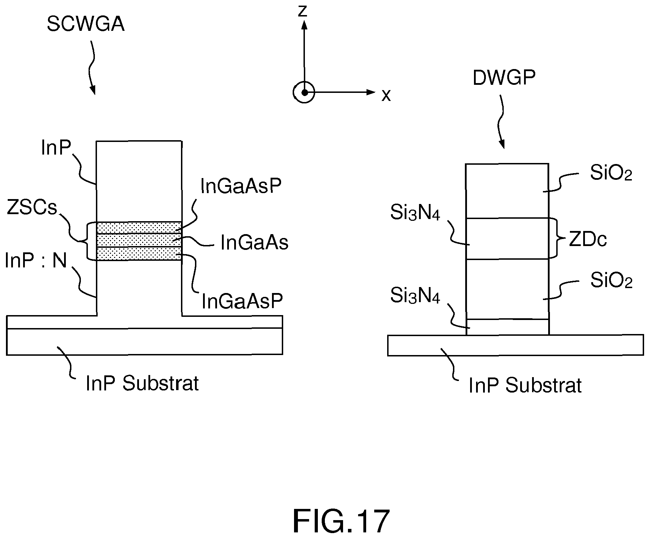

Dans une quatrième étape on définit un guide d'onde passif diélectrique à partir de l'empilement de matériaux diélectrique, et le cas échéant si cela n'a pas déjà été effectué (cf première variante du procédé), selon une deuxième variante on définit un ou deux guides d'onde actifs semiconducteurs à partir du ou des empilements de matériaux semiconducteurs, tel qu'illustré figure 17. On entend par « définir » un guide d'onde le fait de finaliser la délimitation spatiale de l'empilement qui le constitue.

La figure 17 illustre le cas d'un ruban profond (« deep ridge ») pour le guide semiconducteur et le guide diélectrique. Les autres types de guides, dont des exemples sont représentés sur la figure 3, peuvent également être réalisés. Pour un guide nervure par exemple, la gravure s'arrête au dessus des zones de coeur. Pour un guide enterré, il faut encapsuler le guide dans un matériau servant de couche de confinement latéral. Pour le guide passif, c'est typiquement le matériau qui fait office de couche de confinement supérieur qui est déposé.

Les épaisseurs des couches diélectriques sont telles que la zone de coeur ZDc du guide d'onde passif diélectrique est en regard de la zone de coeur ZSCc du guide d'onde actif semiconducteur.

Les guides d'onde sont couplés l'un à l'autre de sorte qu'un mode lumineux M se propageant dans la zone de coeur de l'un des guides d'onde se propage dans la zone de coeur de l'autre guide d'onde au travers d'une interface de raccordement constituée des couches diélectriques antireflets. Les épaisseurs traversées par le mode lumineux et les indices des couches diélectriques antireflet sont déterminés de sorte que les couches diélectriques antireflet constituent un élément antireflet AR, de manière à minimiser les pertes lumineuses à l'interface entre les deux zones de coeur.

**Revendications**

1. Circuit photonique intégré (PIC) comprenant au moins un guide d'onde passif diélectrique (DWGP) disposé entre un premier (SCWGA1) et un deuxième (SWGA2) guide d'onde actif semi conducteur, lesdits guides d'onde étant disposés sur un substrat (SCSub) comprenant un matériau semi conducteur,
chaque guide d'onde comprenant une zone de coeur (ZSCc1, ZSCc2, ZDc) dans laquelle se propage un mode lumineux et deux zones de confinement disposées de part et d'autre de la zone de coeur, chaque guide d'onde actif étant couplé au guide d'onde passif de sorte que le mode lumineux se propageant dans la zone de coeur de l'un des guides d'onde se propage dans la zone de coeur de l'autre guide d'onde,
chaque guide d'onde actif étant en outre raccordé au guide d'onde passif par une interface constituée d'un élément antireflet (AR) comprenant au moins une couche antireflet en matériau diélectrique ($C_{AR}$, $C_{AR}(1)$, $C_{AR}(2)$), et disposé sensiblement perpendiculairement au plan du substrat, la ou les couches antireflet présentant un indice ($n_{AR}$, $n_{AR}(1)$, $n_{AR}(2)$) et une épaisseur ($e_{AR}$, $e_{AR}(1)$, $e_{AR}(2)$) adaptés de manière à minimiser les pertes lumineuses à l'interface entre les deux guides d'onde raccordés.

2. Circuit photonique intégré selon la revendication 1 dans lequel les guides d'onde actifs semiconducteurs et le guide d'onde diélectrique passif sont monomode.

3. Circuit photonique intégré selon l'une des revendications 1 ou 2 dans lequel au moins une couche diélectrique antireflet s'étend continûment parallèlement au plan du substrat (XY) entre la zone de coeur du guide d'onde passif diélectrique (ZDc) et le substrat (SCSub).

4. Circuit photonique intégré selon l'une des revendications précédentes dans lequel l'élément antireflet est constitué d'une couche antireflet unique ($C_{AR}$

5. Circuit photonique intégré selon l'une des revendications 1 à 3 dans lequel l'élément antireflet (AR) est constitué d'une première couche antireflet ($C_{AR}(1)$) en contact avec la zone de coeur (ZSCc1, ZSCc2) du guide d'onde actif semi conducteur raccordé et d'une deuxième couche antireflet ($C_{AR}(2)$) en contact avec la zone de coeur (ZSCc) du guide d'onde passif diélectrique.

6. Circuit photonique intégré selon la revendication 5 dans lequel la première couche ($C_{AR}(1)$) est en $TiO_2$ ou en $Si_3N_4$ et la deuxième couche ($C_{AR}(2)$) en $SiO_2$.

7. Circuit photonique intégré selon l'une des revendications 5 ou 6 dans lequel la première couche antireflet ($C_{AR}(1)$) et la deuxième couche antireflet ($C_{AR}(2)$) s'étendent continûment parallèlement au plan du substrat (XY) entre la zone de coeur du guide d'onde passif diélectrique (ZDc) et le substrat, une partie de la deuxième couche antireflet s'étendant parallèlement au plan du substrat constituant en outre la zone de confinement (ZDCONF1) côté substrat du guide d'onde passif diélectrique (DWGP).

8. Circuit photonique intégré selon l'une des revendications précédentes dans lequel le matériau semiconducteur du substrat est de même nature chimique que le matériau semiconducteur des guides d'onde actifs.

9. Circuit photonique intégré selon l'une des revendications 1 à 7 dans lequel le matériau semiconducteur du substrat n'est pas de même nature chimique que le matériau semiconducteur des guides d'onde actifs, et dans lequel le substrat comprend une partie principale (PP) et une couche tampon (BUF) configurée pour réaliser une adaptation de maille atomique entre la partie principale du substrat et les guides d'onde actifs semiconducteurs.

10. Procédé de fabrication d'un circuit photonique intégré (PIC) comprenant au moins un guide d'onde actif semi conducteur (SCWGA) et au moins un guide d'onde passif diélectrique (DWGP), le procédé comprenant les étapes consistant à :

- réaliser par épitaxie sur un substrat comprenant un matériau semi conducteur, au moins un ou deux empilements de matériaux semiconducteurs comprenant chacun au moins une couche apte à constituer une zone de coeur d'un guide d'onde actif semiconducteur et au moins deux couches disposées de chaque côté de la zone de coeur et aptes à constituer chacune une zone de confinement,

- graver le ou les empilements de matériaux semiconducteurs de manière à réaliser au moins une zone du substrat dépourvue du ou desdits empilements semiconducteurs,

- réaliser un empilement de matériaux diélectriques, comprenant les sous étapes consistant à :

*déposer une première couche diélectrique antireflet ($C_{AR}(1)$) de manière à ce qu'elle s'étende continûment sur une tranche du guide d'onde actif et parallèlement au substrat sur la partie du substrat dépourvue du ou des r empilements de matériaux semiconducteurs,

*déposer au moins une deuxième couche diélectrique antireflet ($C_{AR}(2)$) de manière à ce qu'elle s'étende continûment par-dessus la première couche,

*déposer par-dessus la dernière couche diélectrique antireflet au moins une couche diélectrique apte à constituer une zone de coeur d'un guide d'onde passif diélectrique,

- définir un ou deux guides d'onde actifs semiconducteurs et un guide d'onde passif diélectrique à partir du ou des empilements semiconducteur et de l'empilement diélectrique,

- les épaisseurs des couches diélectriques étant telles que la zone de coeur du guide d'onde passif diélectrique est en regard de la zone de coeur du ou des deux guides d'onde actifs semiconducteurs, les guides d'onde étant couplés l'un à l'autre de sorte qu'un mode lumineux se propageant dans la zone de coeur de l'un des guides d'onde se propage dans la zone de coeur de l'autre guide d'onde au travers d'une interface de raccordement constituée des couches diélectriques antireflets,

les épaisseurs traversées par le mode lumineux et les indices des couches diélectriques antireflet étant déterminés de sorte que lesdites couches diélectriques antireflet constituent un élément antireflet (AR), de manière à minimiser les pertes lumineuses à l'interface entre les deux zones de coeur.

11. Procédé de fabrication d'un circuit photonique intégré (PIC) comprenant au moins un guide d'onde actif semi conducteur (SCWGA) et au moins un guide d'onde passif diélectrique (DWGP), le procédé comprenant les étapes consistant à :

- réaliser par épitaxie sur un substrat comprenant un matériau semi conducteur, au moins un ou deux empilements de matériaux semiconducteurs comprenant chacun au moins une couche apte à constituer une zone de coeur d'un guide d'onde actif semiconducteur et au moins deux couches disposées de chaque côté de la zone de coeur et aptes à constituer chacune une zone de confinement, et définir au moins un ou deux guides semiconducteurs à partir de ce ou ces empilements de matériaux semiconducteurs,

- graver le ou les empilements de matériaux semiconducteurs de manière à réaliser au moins une zone du substrat dépourvue dudit ou desdits empilements de matériaux semiconducteurs,

- réaliser un empilement de matériaux diélectriques, comprenant les sous étapes consistant à :

*déposer une première couche diélectrique antireflet ($C_{AR}(1)$) de manière à ce qu'elle s'étende continûment sur une tranche du guide d'onde actif et parallèlement au substrat sur la partie du substrat dépourvue du ou des r empilements de matériaux semiconducteurs,

*déposer au moins une deuxième couche diélectrique antireflet ($C_{AR}(2)$) de manière à ce qu'elle s'étende continûment par-dessus la première couche,

*déposer par-dessus la dernière couche diélectrique antireflet au moins une couche diélectrique apte à constituer une zone de coeur d'un guide d'onde passif diélectrique,

- définir un guide d'onde passif diélectrique à partir de l'empilement diélectrique,

- les épaisseurs des couches diélectriques étant telles que la zone de coeur du guide d'onde passif diélectrique est en regard de la zone de coeur du ou des deux guides d'onde actifs semiconducteurs, les guides d'onde étant couplés l'un à l'autre de sorte qu'un mode lumineux se propageant dans la zone de coeur de l'un des guides d'onde se propage dans la zone de coeur de l'autre guide d'onde au travers d'une interface de raccordement constituée des couches diélectriques antireflets,

les épaisseurs traversées par le mode lumineux et les indices des couches diélectriques antireflet étant déterminés de sorte que lesdites couches diélectriques antireflet constituent un élément antireflet (AR), de manière à minimiser les pertes lumineuses à l'interface entre les deux zones de coeur.

a-SiNx : H(n=3.27)

a-SiNx : H(n=3.17)

12

11

InP p

InP n

10

InP substrat

**FIG.1**

PIC

SCWGA1

AR  DWGP  ZDc  AR  SCWGA2

ZSCc1  ZSCc2

SCSub

z

x  y

**FIG.2**

Zc  Zc  Zc  Zc

z

x

**FIG.3a  FIG.3b  FIG.3c  FIG.3d**

PIC

SCWGA1      AR     DWGP   AR      SCWGA2

BUF

PP          SCSub

## FIG.4

PIC

SCWGA1    AR   ZDc    DWGP    SCWGA2

ZSCc

SCSub

$C_{AR}(1)$
$(n_{AR}(1), eAR(1))$      $C_{AR}(2)$
$(n_{AR}(2), eAR(2))$

## FIG.5

FIG.6

FIG.7

FIG.8

FIG.9

FIG.10

PIC

eH   DWGP    SCWGA2

SCWGA1    SiO₂    (Si₃N₄, n =2, 600nm)

InP    InP

InGaAsP    InGaAsP

600nm    600nm

InPdopé n    InPdopé n

InP

eᵥ

$C_{AR}(1)\ (e_{H1},\ e_{V1})$ :

$\begin{cases} TiO_2,\ n=2{,}3, & e_{H1}=150\ nm \\ & e_{V1}=300\ nm \end{cases}$

$C_{AR}(2)\ (e_{H2},\ e_{V2})$ :

$\begin{cases} SiO_2,\ n=1{,}5, & e_{H2}=1000\ nm \\ & e_{V2}=2000\ nm \end{cases}$

FIG.11

FIG.12

Z

X

SCWGA

DWGP

1,5

3,38

2

e

~ 3,17

3,17

## FIG.13

170

z(μm)

e

x(μm)

## FIG.14

InP

InGaAsP

InGaAs

InGaAsP

ZSCc

InP dopé n

$z$

$x$ $\rightarrow$ $y$

InP

## FIG.15

AR

$z$

$x$ $\rightarrow$ $y$

190

$SiO_2 = Z_{CONFSUP}$

InP

InGaAsP

ZSCc

InGaAs

InGaAsP

ZDc

InP

M

191

$C_{AR}(1)$

$Si_3N_4$

$C_{AR}(2) = Z_{CONFINF}$

$SiO_2$

## FIG.16

SCWGA

Z

X

DWGP

InP

InGaAsP

ZSCs

InGaAs

InP : N

InGaAsP

InP Substrat

Si₃N₄

Si₃N₄

SiO₂

ZDc

SiO₂

InP Substrat

FIG.17

Europäisches Patentamt
European Patent Office
Office européen des brevets

## RAPPORT DE RECHERCHE EUROPEENNE

Numéro de la demande

EP 17 20 8082

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 519 432 A1 (WESTERN ELECTRIC CO [US]) 8 juillet 1983 (1983-07-08) * pages 1-20 * * figures 1-10 * ----- | 1-11 | INV. G02B6/12 G02B6/13 G02B6/132 |
| A | GB 2 350 719 A (BOOKHAM TECHNOLOGY LTD [GB]; BOOKHAM TECHNOLOGY PLC [GB]) 6 décembre 2000 (2000-12-06) * pages 4-7, 9 * * figures 2, 4 * ----- | 1-11 | |
| A | JP 2006 106587 A (NIPPON TELEGRAPH & TELEPHONE) 20 avril 2006 (2006-04-20) * alinéa [0047] * * figures 4, 6 * ----- | 1-11 | |
| A | GB 2 115 218 A (WESTERN ELECTRIC CO) 1 septembre 1983 (1983-09-01) * le document en entier * ----- | 1-11 | DOMAINES TECHNIQUES RECHERCHES (IPC) G02B |

Le présent rapport a été établi pour toutes les revendications

| Lieu de la recherche | Date d'achèvement de la recherche | Examinateur |
|---|---|---|
| La Haye | 4 mai 2018 | Hohmann, Leander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 20 8082

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-2018

| Document brevet cité au rapport de recherche | | Date de publication | Membre(s) de la famille de brevet(s) | | Date de publication |
|---|---|---|---|---|---|
| FR 2519432 | A1 | 08-07-1983 | CA | 1222652 A | 09-06-1987 |
| | | | DE | 3300131 A1 | 14-07-1983 |
| | | | FR | 2519432 A1 | 08-07-1983 |
| | | | GB | 2112956 A | 27-07-1983 |
| | | | JP | H0548444 B2 | 21-07-1993 |
| | | | JP | S58121006 A | 19-07-1983 |
| | | | US | 4582390 A | 15-04-1986 |
| GB 2350719 | A | 06-12-2000 | AU | 4938600 A | 18-12-2000 |
| | | | GB | 2350719 A | 06-12-2000 |
| | | | WO | 0073828 A1 | 07-12-2000 |
| JP 2006106587 | A | 20-04-2006 | AUCUN | | |
| GB 2115218 | A | 01-09-1983 | CA | 1210122 A | 19-08-1986 |
| | | | DE | 3306085 A1 | 01-09-1983 |
| | | | FR | 2522206 A1 | 26-08-1983 |
| | | | GB | 2115218 A | 01-09-1983 |
| | | | JP | S58155788 A | 16-09-1983 |
| | | | US | 4464762 A | 07-08-1984 |

EPO FORM P0460

Pour tout renseignement concernant cette annexe : voir Journal Officiel de l'Office européen des brevets, No.12/82